# EUROPEAN PATENT SPECIFICATION

(11) **EP 1 847 451 B1**
(45) Date of publication and mention of the grant of the patent: **16.09.2009**
(21) Application number: 07104608.0
(22) Date of filing: 21.03.2007
(51) Int. Cl.: B62K 19/30, B62K 11/10

(54) **Motorcycle**
Motorrad
Motocyclette

(30) Priority: 19.04.2006 JP 2006115336
(43) Date of publication of application: 24.10.2007
(73) Proprietor: HONDA MOTOR CO., LTD., Tokyo 107-8556 (JP)
(72) Inventor: Kikuno, Junji, Saitama 351-0193 (JP); Arai, Michito, Saitama 351-0193 (JP); Kuramitsu, Tomofumi, Saitama 351-0193 (JP)
(74) Representative: Rupp, Christian

(56) References cited:
- EP-A1- 0 751 063
- EP-A1- 1 557 349
- JP-A- 1 262 278
- JP-A- 10 147 275
- JP-A- 56 025 021

## Description

The present invention relates to a motorcycle where a radiator is arranged in its body.

A motorcycle where a radiator is arranged in its body and an electric equipment housing that houses electric equipment is arranged is known (for example, refer to a patent document 1). [Patent document 1] JP-A No. H8-127377 (Fig. 3)

As shown in Fig. 3 in the patent document 1, a radiator 25 is arranged on the downside of a step floor, a battery 45 is arranged side by side with the radiator 25, and a duct 39 as air intake means is arranged in front of the radiator 25. The radiator 25 is cooled by passing running wind in a direction A of ventilation from the front of the body.

A demand that the radiator 25 is to be large-sized is made to secure predetermined cooling performance because the output of an engine is enhanced, however, when the width of the radiator 25 is increased, there is a large constraint on securing space for mounting it in a case that the radiator 25 is arranged on the downside of the step floor as in related art. Further, as the radiator is required to be mounted in a position where running wind can be efficiently guided to the radiator, the position where the radiator is mounted is more limited.

Then, it is conceivable that a radiator formed longer in height is arranged utilizing dead space at the back of a front wheel and in front of the step floor so as to enhance the efficiency of cooling. However, when the radiator is arranged in such a position, electric equipment such as a battery located at the back of the radiator is exposed to heat by the radiator and to a warm current that passes the radiator and it is required that enhancing the efficiency of cooling the radiator and securing performance for cooling the electric equipment are compatible.
JP Patent Publication No. 56025021 discloses how to perform effective cooling for electric equipment situated at the rear side of a fuel tank, by mounting a side cover, forming a duct for guiding air from the side of a steering head pipe to the rear side of the fuel tank, at the rear of the head pipe. The reference discloses a side cover made of synthetic resin, formed passing on tank rails at left and right sides, between a head pipe and fuel tank to enclose the rear of the head pipe from both sides, and ducts for guiding air from the side of the head pipe to the rear side of the fuel tank formed at left and right sides. The ducts at the right side provide their opening port in the vicinity of a heat radiating plate of an electronic regulator mounted to the inside of a tension pipe and the duct at the left side provides its opening port in the vicinity of a fuel pump. While a baffle plate is mounted to a cross member, in this way high temperature air passing a radiator can be guided to the side of an engine.
Document JP 56025021 discloses a motorcycle according with the preamble of claim 1.
JP Patent Publication No. 1262278 discloses exhausting hot air downward and preventing the heat damage to electric parts from occurring, by installing an outside air intake port in front of a front cover provided with a ventilation flue, and situating an exhaust port in the upper part of a front wheel and in front than a front fork, then having it opened to the lower part. The document proposes a portion being around a fork and in the upper part of a front wheel surrounded by a front cover, while a tubular ventilation flue, extending in the rear from a front wall and consisting of a wall, a side wall and a bottom wall, is formed in the inward, and a radiator is installed there. An outside air intake port of the ventilation flue is installed in a lower part of the front wall, while an exhaust port is situated in the upper part of a fender of the front wheel and at the front side of a front fork, and it is opened downward. With this constitution, hot air that runs past the radiator is exhausted downward at once at the front side of the fork, so that a temperature rise due to this hot air is in no case added to electric equipment set up in and around a steering shaft head, thus any heat damage is preventable.
JP Patent Publication No. 10147275 discloses how to arrange parts by effectively utilizing dead space in the rear of a radiator and how to reduce thermal affection on parts by providing a part in which passing of travelling wind is locally limited on the radiator and arranging parts in the rear of this part. The reference discloses a radiator covered with a protector and parts such as electrical equipment parts that are fitted on the fitting part of an upper bracket provided on the upper side fitting part of the protector. Parts are arranged between the upper location of the radiator and a fuel tank and in dead space of a part covered with a radiator cover. This part becomes the rear side of a part in which the radiator cover is notched and a part A in which passing of travelling wind is relatively limited as compared with the lower area of the radiator cover, hitting of air cooling the radiator on parts is reduced and thermal affection received by parts is prevented.
Technique that enables enhancing the efficiency of cooling the radiator and simultaneously enhancing the efficiency of cooling the electric equipment is desired.

The object of the present invention is to provide a motorcycle where the efficiency of cooling electric equipment can be enhanced.

In accordance with the present invention there is provided a motorcycle as set out in claim 1. Preferred embodiments of the present invention are laid down in the dependent claims.

In the invention according to Claim 2, a leg shield that covers the front of a rider's legs when the rider sits on a seat for occupants is provided to the body, an air intake guide is formed between the leg shield and an extended part of the partition and the air intake guide continues to the air duct.

In the invention according to Claim 3, the air duct is partitioned into a front duct and a rear duct by a separating wall provided between the partition and the electric equipment housing, air that passes the front duct is exhausted outside from the front duct and air that passes the rear duct is exhausted outside after the air flows along the bottom of the electric equipment housing.

In the invention according to Claim 4, the radiator is arranged in the leg shield at the back of a front wheel, the electric equipment housing is arranged at the back of the leg shield and on the downside of a footrest member and the electric equipment housing is arranged close to the radiator.

In the invention according to Claim 5, an outside air intake port that takes outside air into the air intake guide is provided in a position higher than an upper end of the radiator.

### [Effect of the Invention]

In the invention according to Claim 1, as the partition is provided between the radiator and the electric equipment housing and the air duct for ventilation is formed between the partition and the electric equipment housing, running wind passes the air duct, passes the vicinity of the electric equipment housing, and cools the electric equipment housing. As the electric equipment housing is not influenced by a warm current that passes the radiator and in addition, is cooled by cooling air, the efficiency of cooling the electric equipment can be enhanced.
Therefore, the efficiency of cooling the electric equipment can be enhanced.

In the invention according to Claim 2, the leg shield that covers the fronts of rider's legs when a rider sits on the seat for occupants is provided to the body, the air intake guide is formed between the leg shield and the extended part of the partition, and the air intake guide continues to the air duct. As the air intake guide is formed by only providing the extended part acquired by extending the partition, the air intake guide can be acquired with simple structure.

In the invention according to Claim 3, the air duct is partitioned into the front duct and the rear duct by the separating wall provided between the partition and the electric equipment housing.
As running wind passes the front duct and is exhausted outside from the front duct, the heat of the radiator is hardly conducted to the electric equipment.
Besides, as running wind passes the rear duct and is exhausted outside after the running wind flows along the bottom of the electric equipment housing, the efficiency of cooling the electric equipment can be more enhanced.

In the invention according to Claim 4, as the electric equipment housing is arranged close to the radiator, the radiator and the electric equipment can be arranged compactly.
Therefore, limited space can be effectively utilized.

In the invention according to Claim 5, as the outside air intake port that takes outside air into the air intake guide is provided in the position higher than the upper end of the radiator, the invasion of raised dust and mud into the outside air intake port can be inhibited.
Fig. 1 is a side view showing a motorcycle according to the present invention.
Fig. 2 shows structure for mounting a radiator.
Fig. 3 is an explanatory drawing for explaining the configuration of an electric equipment housing and its vicinity.
Fig. 4 is a sectional view showing a main part of the motorcycle according to the present invention.
Fig. 5 is a perspective view showing the structure of an extended part provided with an outside air intake port and its vicinity according to the present invention.
Fig. 6 is a sectional view showing the configuration of the electric equipment housing and its vicinity according to the present invention.
Fig. 7 is a sectional view viewed along a line 7-7 in Fig. 6.

Referring to the attached drawings, a best embodiment of the present invention will be described below. In the drawings, "front side", "rear side", "left", "right", "upside" and "downside" denote directions viewed from a rider. The drawings shall be viewed in a direction of reference numerals.

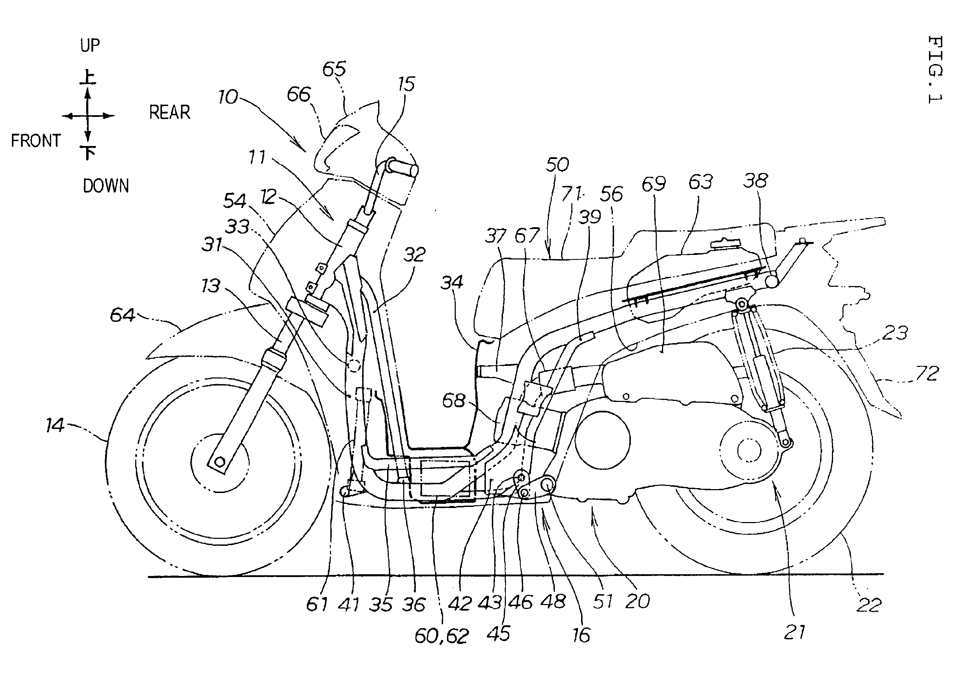

Fig. 1 is a side view showing a motorcycle according to the present invention. The motorcycle 10 is a scooter-type vehicle provided with a head pipe 12 provided to the front end of a body frame 11, a front fork 13 supported by the head pipe 12 so that the front fork can be steered, a front wheel 14 supported by a lower part of the front fork 13, a steering handlebar 15 attached to an upper part of the front fork 13, a power unit 20 attached to a lower part of the body frame 11 via a link mechanism 16 so that the power unit can be vertically rocked, a rear wheel 22 as a driving wheel rotatably provided to the rear 21 of the power unit 20 and a rear cushion unit 23 attached between the rear 21 of the power unit 20 and the rear of the body frame 11.

The body frame 11 is mainly configured by the head pipe 12, a pair of right and left side frames 31, 31 (only a reference numeral 31 on this side is shown) bonded to the head pipe 12, a center frame 32 hung from the head pipe 12 between the side frames 31, 31, a front cross member 33 that couples the respective fronts of both side frames 31, 31, coupling frames 35, 35 (only a reference numeral 35 on this side is shown) which are extended longitudinally on the downside of a center cover 34 that also functions as a footrest for a rider and both ends of which are coupled to each side frame 31, 31, a lower cross member 36 that is arranged on the downside of both coupling frames 35, 35, couples both side frames 31, 31 and couples a lower end of the center frame 32, an intermediate cross member 37 that couples respective intermediate parts of both side frames 31, 31, a rear cross member 38 that couples respective rear ends of both side frames 31, 31 and a pair of right and left rear subframes 39, 39 (only a reference numeral 39 on this side is shown) attached to both side frames 31, 31. A reference numeral 41 denotes a guard arm of a radiator described later.

The link mechanism 16 includes pivot plates 42, 42 (only a reference numeral 42 on this side is shown) attached to respective lower parts of the side frames 31, 31, a pair of right and left first link arms 45, 45 (only a reference numeral 45 on this side is shown) turnably supported by the pivot plates 42 via a pivot shaft 43 on the side of the body frame, second link arms 48, 48 (only a reference numeral 48 on this side is shown) respective one ends of which are turnably coupled to the respective other ends of the first link arms 45, 45 via a coupling shaft 46 and a pivot shaft 51 on the side of the power unit attached to the respective other ends of the second link arms 48, 48 and turnably supported by the power unit 20.

The motorcycle 10 is provided with a front cowl 54 that is arranged in front of the head pipe 12 and the right and left side frames 31, 31 and covers the front of a body 50, the center cover 34 that is arranged at the back of the front cowl 54 and also functions as the footrest for a rider and a rear cowl 56 that is arranged at the back of the center cover 34 and covers the rear of the body 50.
In this case, the front cowl 54 includes a leg shield described later. The body frame 11 is provided to the body 50 of the motorcycle 10.

A radiator 61 is arranged in the front of the body 50 in the motorcycle 10, electric equipment 60 including a battery 62 is arranged on the downside of the center cover 34 at the back of the radiator 61, and a fuel tank 63 is arranged in the rear of the body 50.

A reference numeral 64 denotes a front fender, 65 denotes a subcowl, 66 denotes a headlight, 67 denotes fuel supply equipment, 68 denotes a cylinder which is a part of the power unit 20, 69 denotes an air cleaner, 71 denotes a seat for occupants, and 72 denotes a rear fender.

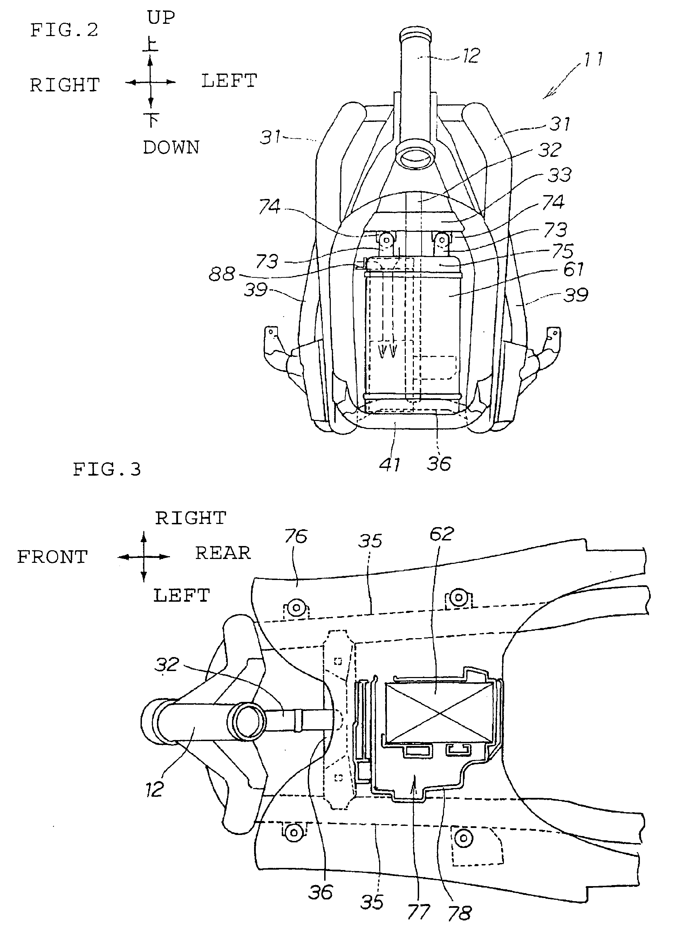

Fig. 2 shows the mounting structure of the radiator and a pair of right and left supporting plates 73, 73 are extended to the radiator 61 upward from its upper part. The supporting plates 73, 73 of the radiator 61 are supported by a pair of right and left stays 74, 74 extended downward from the front cross member 33.
An outside air intake guide 88 that guides air for cooling an electric equipment housing described later is arranged on the right side of a radiator tank 75 provided to an upper part of the radiator 61.

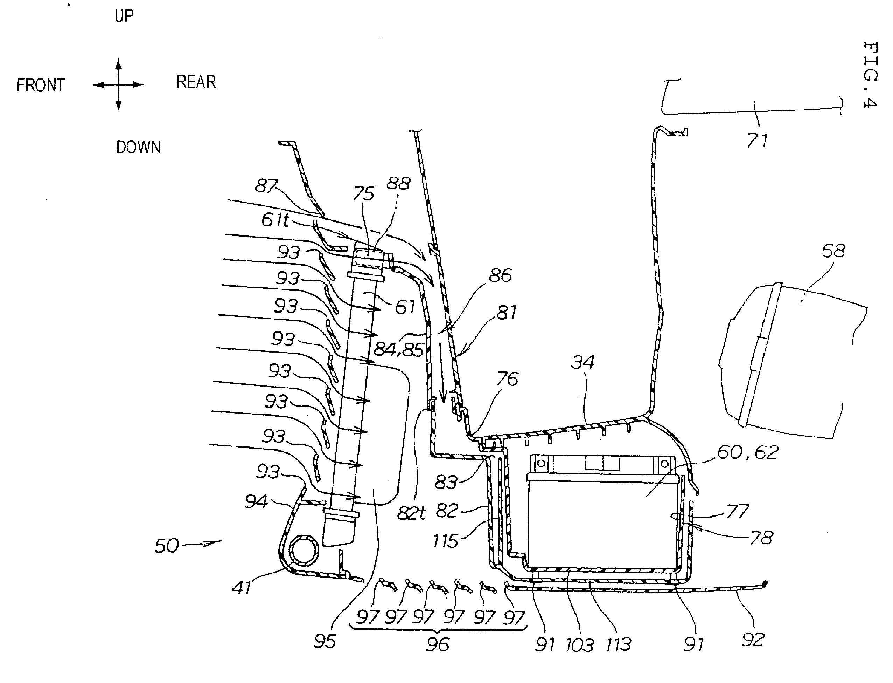

Fig. 3 is an explanatory drawing for explaining the configuration of the electric equipment housing and its vicinity. A step floor 76 is installed on the right and left coupling frames 35, 35 from the upside and the electric equipment housing 77 is formed on the step floor 76. The electric equipment housing 77 is provided with a partition wall 78 in its vicinity. Referring to Fig. 4, the details of the electric equipment housing 77 will be described below.

Fig. 4 is a sectional view showing a main part of the motorcycle according to the present invention and shows the configuration of the electric equipment housing 77 and its vicinity respectively provided to the step floor 76.
The radiator 61 that cools cooling water of the engine is arranged in the leg shield 81 that covers the fronts of rider's legs when a rider sits on the seat for occupants (71 in Fig. 1) in a position at the back of the front wheel (14 in Fig. 1), the battery 62 for the electric equipment 60 is arranged at the back of the radiator 61, and the electric equipment housing 77 that houses the battery 62 is arranged.

The electric equipment housing 77 is arranged on the downside of the center cover 34 that also functions as a footrest member 79 in a position at the back of the leg shield 81 and is arranged closely at the back of the radiator 61.
As the electric equipment housing 77 is arranged close to the radiator 61, the radiator 61 and the electric equipment 60 can be arranged closely and compactly.
Therefore, limited space can be effectively utilized.

A partition 82 is provided between the radiator 61 and the electric equipment housing 77 and an air duct 83 for ventilation is formed between the partition 82 and the electric equipment housing 77.
In addition, the leg shield 81 is coupled to the upper end of the step floor 76 provided with the electric equipment housing 77, an extended member 85 as an extended part 84 is coupled upward from an upper end 82t of the partition 82, an air intake guide 86 is formed between the leg shield 81 and the extended member 85, and the air intake guide 86 continues to the air duct 83. The air intake guide 86 is extended to the substantial upper end of the radiator 61 and an outside air intake port 87 that takes outside air into the air intake guide 86 is provided in a higher position than the upper end 61t of the radiator 61.

As the outside air intake port 87 that takes outside air into the air intake guide 86 is provided in the higher position than the upper end of the radiator 61, it can inhibit the invasion of raised duct and mud through the outside air intake port 87.

As the air intake guide 86 is formed between the leg shield 81 and the extended member 85 of the partition 82 and the air intake guide 86 continues to the air duct 83, the air intake guide 86 can be formed with simple structure that the extended member 85 is merely provided. Therefore, the number of parts can be inhibited.

The partition 82 is attached by plural fastening members 91 from the downside of the step floor 76.
An undercover 92 that covers the bottom of the body 50 is attached on the downside of the partition 82. Plural openings 97 are provided to the front of the undercover 92. The openings 97 function as an exhaust port 96 of air that passes the radiator 61.

The center cover 34 that covers the upside of the step floor 76 is attached.
A radiator cover 94 having plural openings 93 that can pass air is arranged in front of the radiator 61. A reference numeral 95 denotes a fan motor mounted on the radiator 61.

Running wind that passes the openings 93 open on the radiator cover 94 is radiated from the openings 97 open on the undercover 92 through the radiator 61.
Besides, running wind that passes the outside air intake port 87 passes over the radiator tank 75 and is guided into the air intake guide 86.
In addition, a part of running wind that passes the openings 93 of the radiator cover 94 passes by the radiator 61 by the outside air intake guide 88 and is guided into the air intake guide 86.

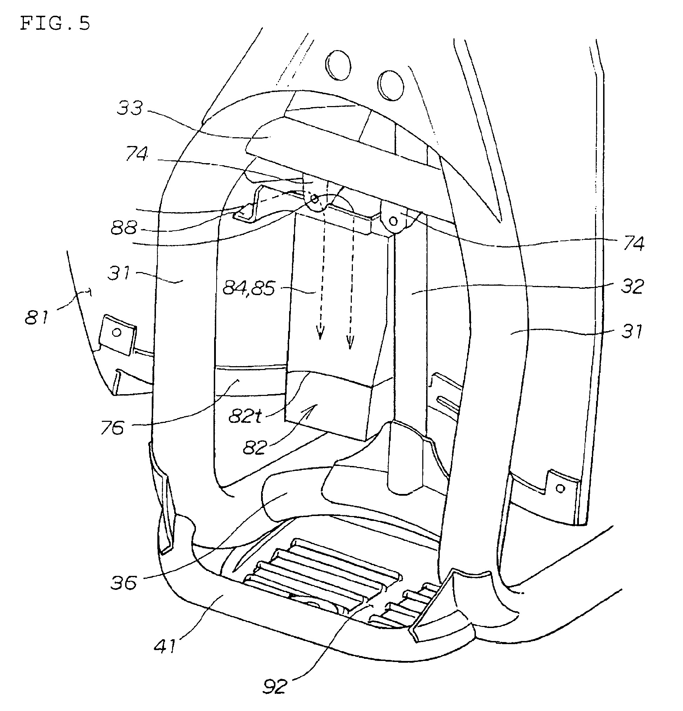

Fig. 5 is a perspective view showing the structure of the extended part provided with the outside air intake port and its vicinity according to the present invention. In Fig. 5, the radiator is detached.
The partition 82 is arranged in front of the step floor 76 and the extended member 85 is coupled to the upper end 82t of the partition 82.
As described above, running wind that passes the upside of and by the radiator (61 in Fig. 4) flows together in the vicinity of an entrance of the air intake guide (86 in Fig. 4) and is guided into the air intake guide 86.

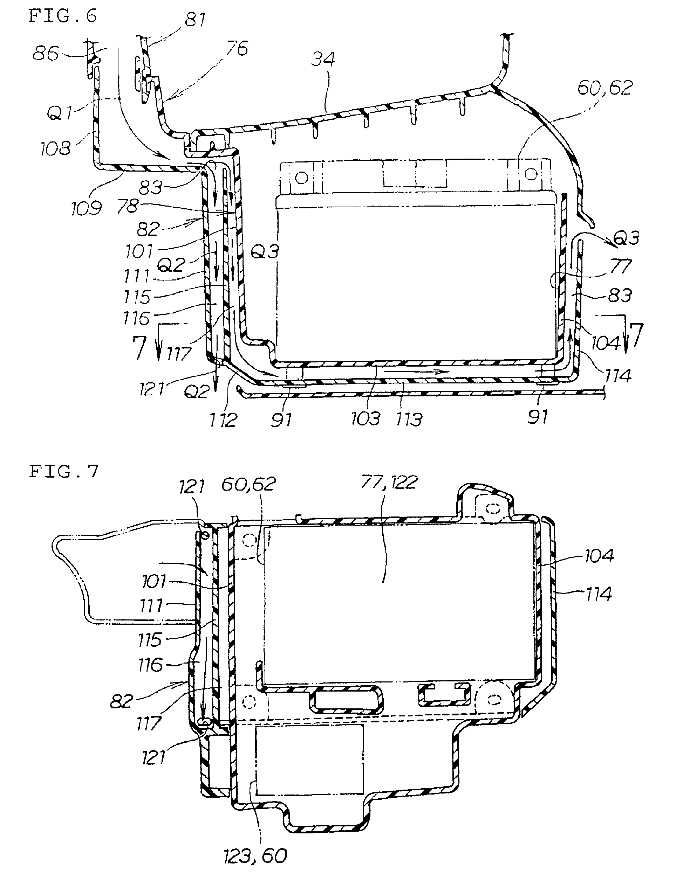

Fig. 6 is a sectional view showing the configuration of the electric equipment housing and its vicinity according to the present invention and shows structure for cooling the battery 62 as the electric equipment 60.
The electric equipment housing 77 is provided with the partition wall 78 and is formed by partitioning it with the partition wall 78. The partition wall 78 is provided with a front side wall 101, a bottom wall 103 and a rear side wall 104.

The partition 82 attached below the step floor 76 is configured by a vertical wall 108, a lateral wall 109, a front wall 111 extended downward from the lateral wall 109, a diagonal wall 112 extended diagonally backward from the front wall 111, a bottom wall 113 extended backward from the diagonal wall 112 and a rear wall 114 extended upward from the bottom wall 113 in order from the upper end of the front, and the walls are arranged so that they encircle the partition wall 78. Therefore, the air duct 83 is formed between the partition 82 and the partition wall 78.

In addition, a separating wall 115 for separating the front side wall 101 and the partition 82 is provided between the front side wall 101 forming a part of the partition wall 78 and the partition 82. The separating wall 115 is extended upward from the diagonal wall 112.

When the front side isolated in two by the separating wall 115 of the air duct is a front duct 116 and the rear side is a rear duct 117, the front duct 116 as adiabatic space is formed between the front wall 111 and the separating wall 115. The rear duct 117 also functions as the above-mentioned air duct 83. An opening 121 is formed at the bottom of the front duct 116.

Air of a flow rate Q1 that flows via the outside air intake port (87 in Fig. 4) passes the air intake guide 86, is separated by the separating wall 115, and is divided into the front duct 116 and the rear duct 117. Air of a flow rate Q2 that flows through the front duct 116 is exhausted outside via the opening 121, air of a flow rate Q3 that flows through the rear duct 117 passes between the rear side wall 104 and the rear wall 114, and is exhausted outside via the opening 121 provided on their upside. In this case, relation among the flow rates is expressed by "Q1 = Q2 + Q3".

That is, the air duct 83 is divided into the front duct 116 and the rear duct 117 by the separating wall 115 provided between the partition 82 and the electric equipment housing 77, the air of the flow rate Q2 that flows through the front duct 116 is exhausted outside from the front duct 116, and after the air of the flow rate Q3 that flows through the rear duct 117 flows along the bottom of the electric equipment housing 77, it is exhausted outside.

As air as running wind is made to flow at the flow rate Q2 in the front duct 116, the heat of the radiator 61 can be substantially prevented from being conducted to the electric equipment 60.
Besides, as air as running wind is made to flow at the flow rate Q3 in the rear duct 117, efficiency at which the electric equipment 60 is cooled can be more enhanced.

Fig. 7 is a sectional view viewed along a line 7-7 in Fig. 6 and shows structure acquired by attaching the partition 82 to the electric equipment housing 77 from the underside of the drawing for cooling the electric equipment 60. A reference numeral 123 denotes a fuse box.
The front duct 116 is formed between the front wall 111 and the separating wall 115 and the rear duct 117 is formed between the separating wall 115 and the front side wall 101.

Next, the action of the above-mentioned motorcycle will be described.
As shown in Fig. 4, the electric equipment housing 77 that houses the electric equipment is arranged at the back of the radiator 61, the partition 82 is provided between the radiator 61 and the electric equipment housing 77, and the air duct 83 that conducts air is formed between the partition 82 and the electric equipment housing 77.

Air which is running wind passes the air duct 83, passes the vicinity of the electric equipment housing 77, and cools the electric equipment housing 77. As the electric equipment housing 77 is cooled, the cooling efficiency of the electric equipment 60 can be enhanced. Particularly, the structure is suitable for a case that the structure is utilized for electric equipment such as the battery 62 that it itself generates heat.

In addition, as the electric equipment housing 77 is arranged at the back of the radiator 61, the width of the body is not required to be increased.
Therefore, the cooling efficiency of the electric equipment 60 can be enhanced without increasing the body width.

In Claim 1, the separating wall provided between the partition and the electric equipment housing may be also omitted.

The present invention is suitable for a motorcycle.
10... Motorcycle,
50... Body,
60... Electric equipment,
61... Radiator,
71... Seat for occupants,
77... Electric equipment housing,
79... Footrest member,
81... Leg shield,
82... Partition,
83... Air duct,
84... Extended part,
86... Air intake guide,
87... Outside air intake port,
115... Separating wall,
116... Front duct,
117... Rear duct

## Claims

1. A motorcycle (10) comprising a radiator (61) which is arranged in the body (50) of the motorcycle (10), **characterized by**
an electric equipment housing (77) comprising electric equipment (60) wherein the electric equipment housing (77) is arranged at the back of the radiator (61) and formed with a partition wall (78) which includes a front wall (101), a bottom wall (103) and a rear side wall (104);
a partition (82) provided between the radiator (61) and the electric equipment housing (77), and
an air duct (83) for ventilation formed between the partition (82) and the electric equipment housing (77).

2. The motorcycle (10) according to Claim 1,
wherein a leg shield (81) that covers the front of a rider's legs when said rider sits on a seat for occupants (71), is provided to the body (50);
an air intake guide (86) for taking outside air into the air duct (83) is formed between the leg shield (81) and an extended part (84) of the partition (82); and
the air intake guide (86) continues to the air duct (83).

3. The motorcycle (10) according to Claim 1 or 2,
wherein the air duct (83) is partitioned into a front duct (116) and a rear duct (117) by a separating wall (115) provided between the partition (82) and the electric equipment housing (77);
wherein said front duct (116) exhausts outside said air passing from the front duct (116); and
wherein said rear duct (117) exhausts outside said air passing the rear duct (117) after the air has flown along the bottom of the electric equipment housing (77).

4. The motorcycle (10) according to Claims 1 or 3,
wherein the radiator (61) is arranged in the leg shield (81) at the back of a front wheel;
the electric equipment housing (77) is arranged on the downside of a footrest member (79) at the back of the leg shield (81); and
the electric equipment housing (77) is arranged close to the radiator (61).

5. The motorcycle (10) according to Claims 1, 2, 3 or 4,
wherein an outside air intake port (87) taking outside air into the air intake guide (86) is provided in a position higher than an upper end of the radiator (61).

## Patentansprüche

1. Motorrad (10), umfassend einen Kühler (61), welcher in dem Körper (50) des Motorrads (10) angeordnet ist, **gekennzeichnet durch**
ein Gehäuse für elektrische Ausrüstung (77), welches elektrische Ausrüstung (60) umfasst, wobei das Gehäuse für elektrische Ausrüstung (77) an der Hinterseite des Kühlers (61) angeordnet ist, und mit einer Trennwand (78) ausgebildet ist, welche eine vordere Wand (101), eine Bodenwand (103) und eine hintere Seitenwand (104) enthält;
eine Trennwand (82), welche zwischen dem Kühler (61) und dem Gehäuse für elektrische Ausrüstung (77) vorgesehen ist, und
einen Luftkanal (83) zum Belüften, welcher zwischen der Trennwand (82) und dem Gehäuse für elektrische Ausrüstung (77) gebildet ist.

2. Motorrad (10) gemäß Anspruch 1,
wobei eine Beinschutzplatte (81), welche die Vorderseite der Beine eines Fahrers abdeckt, wenn der Fahrer auf einem Sitz für Passagiere (71) sitzt, an dem Körper (50) vorgesehen ist;
wobei eine Lufteinlassführung (86) zum Aufnehmen von Außenluft in den Luftkanal (83) zwischen der Beinschutzplatte (81) und einem verlängerten Teil (84) der Trennwand (82) gebildet ist; und
wobei die Lufteinlassführung (86) sich zu dem Luftkanal (83) fortsetzt.

3. Motorrad (10) gemäß Anspruch 1 oder 2,
wobei der Luftkanal (83) in einen vorderen Kanal (116) und einen hinteren Kanal (117) durch eine Trennungswand (115) aufgeteilt ist, welche zwischen der Trennwand (82) und dem Gehäuse für elektrische Ausrüstung (77) vorgesehen ist;
wobei der vordere Kanal (116) die Luft nach außen auslässt, welche von dem vorderen Kanal (116) passiert; und
wobei der hinteren Kanal (117) die Luft nach außen auslässt, welche den hinteren Kanal (117) passiert, nachdem die Luft entlang des Bodens des Gehäuses für elektrische Ausrüstung (77) geströmt ist.

4. Motorrad (10) gemäß den Ansprüchen 1 oder 3,
wobei der Kühler (61) in der Beinschutzplatte (81) an der Rückseite eines Vorderrads angeordnet ist;
wobei das Gehäuse für elektrische Ausrüstung (77) auf der Unterseite eines Fußablageelements (79) an der Rückseite der Beinschutzplatte (81) angeordnet ist; und
wobei das Gehäuse für elektrische Ausrüstung (77) dicht an dem Kühler (61) angeordnet ist.

5. Motorrad (10) gemäß den Ansprüchen 1, 2, 3 oder 4,
wobei eine Außenlufteinlassöffnung (87), welche Außenluft in die Lufteinlassführung (86) aufnimmt, in einer Position höher als ein oberes Ende des Kühlers (61) vorgesehen ist.

## Revendications

1. Motocyclette (10) comprenant un radiateur (61) qui est agencé dans la carrosserie (50) de la motocyclette (10), **caractérisée par** :
un boîtier d'équipement électrique (77) comprenant l'équipement électrique (60), dans laquelle le boîtier d'équipement électrique (77) est agencé à l'arrière du radiateur (61) et formé avec une paroi de séparation (78) qui comprend une paroi avant (101), une paroi inférieure (103) et une paroi latérale arrière (104) ;
une séparation (82) prévue entre le radiateur (61) et le boîtier d'équipement électrique (77), et
un conduit d'air (83) pour la ventilation formé entre la séparation (82) et le boîtier d'équipement électrique (77).

2. Motocyclette (10) selon la revendication 1, dans laquelle un protège-jambes (81) qui recouvre l'avant des jambes d'un motocycliste lorsque ledit motocycliste est assis sur un siège pour les occupants (71), est prévu sur la carrosserie (50) ;
un guide d'admission d'air (86) pour prendre l'air extérieur dans le conduit d'air (83) est formé entre le protège-jambes (81) et un prolongement (84) de la séparation (82) ; et
un guide d'admission d'air (86) continue vers le conduit d'air (83).

3. Motocyclette (10) selon la revendication 1 ou 2,
dans laquelle le conduit d'air (83) est séparé en un conduit avant (116) et un conduit arrière (117) par une paroi de séparation (115) prévue entre la séparation (82) et le boîtier d'équipement électrique (77) ;
dans laquelle ledit conduit avant (116) laisse s'échapper à l'extérieur ledit air passant par le conduit avant (116) ; et
dans laquelle ledit conduit arrière (117) laisse s'échapper à l'extérieur ledit air passant par le conduit arrière (117) après que l'air s'est écoulé le long du fond du boîtier d'équipement électrique (77).

4. Motocyclette (10) selon la revendication 1 ou 3,
dans laquelle le radiateur (61) est agencé dans le protège-jambe (81) à l'arrière d'une roue avant ;
le boîtier d'équipement électrique (77) est agencé sur le dessous d'un élément de repose-pieds (79) à l'arrière du protège-jambes (81) ; et
le boîtier d'équipement électrique (77) est agencé à proximité du radiateur (61).

5. Motocyclette (10) selon les revendications 1, 2, 3 ou 4,
dans laquelle un orifice d'admission d'air extérieur (87) prenant l'air extérieur dans le guide d'admission d'air (86) est prévu dans une position plus haute qu'une extrémité supérieure du radiateur (61).
